# EUROPÄISCHE PATENTANMELDUNG

(11) **EP 4 001 444 A1**
(43) Veröffentlichungstag der Anmeldung: **25.05.2022**
(21) Anmeldenummer: 20207140.3
(22) Anmeldetag: 12.11.2020
(51) Int. Cl.: C22B 19/38, C01G 9/03

(54) **VERFAHREN ZUR HERSTELLUNG VON ZINKOXID**

(71) Anmelder: Grillo Zinkoxid GmbH, 38644 Goslar (DE)
(72) Erfinder: Anke, Thorsten, 38644 Goslar (DE)
(74) Vertreter: dompatent von Kreisler Selting Werner - Partnerschaft von Patent- und Rechtsanwälten mbB

(57) **Zusammenfassung**

Die vorliegende Erfindung betrifft ein Verfahren zur Herstellung von Zink-Oxid unmittelbar aus Hartzink, welches die folgenden Schritte umfasst:
a) Bereitstellen von Hartzink,
b) Bereitstellen von Aluminium,
c) Zugabe von Hartzink und Aluminium in einen Drehrohrofen,
d) Erwärmen von Hartzink und Aluminium auf eine Temperatur von zumindest 900 °C, wodurch Zn und eine Al-Fe-Phase erhalten werden,
e) Oxidation des entstehenden gasförmigen Zn, so dass ZnO entsteht, welches kontinuierlich entfernt wird, und
f) Entfernung der Al-Fe-Phase aus dem Drehrohrofen.

## Beschreibung

Die vorliegende Erfindung betrifft ein Verfahren zur Herstellung von Zinkoxid aus Hartzink in einem Drehrohrofen.

Zinkoxid ist eine Verbindung, die in unterschiedlichsten technischen Gebieten eingesetzt wird. Auf Grund seiner halbleitenden Eigenschaften kann es im Bereich der LED, TFT etc. eingesetzt werden. Als weißes Pigment wird es in Farben oder bei der Papierherstellung genutzt. In pharmazeutischen Zusammensetzungen sorgt es für eine trockene Haut. Darüber hinaus findet es in Sonnencremes oder der Vulkanisierung von Gummi Anwendung.

Je nach Anwendung sind unterschiedliche Reinheiten von Zinkoxid gefragt, die insbesondere durch die Wahl des Ausgangsproduktes, Zink, eingestellt werden können. Zinkoxid wird üblicherweise durch die Oxidation von Zink hergestellt. Hierfür kann Zink so hoch erhitzt werden, bis es in die Gasphase übergeht. Durch Kontakt mit Luft erfolgt die Oxidation des Zinks.

Neben der Reinheit sind jedoch auch die Kosten relevant. Gerade in technischen Anwendungen, wie der Herstellung von Autoreifen, ist der Kostenfaktor relevant. Um die Rohstoffkosten zu senken, wird Zink teilweise durch sogenanntes Hartzink ersetzt. Hartzink ist eine Zink-Phase, welche auch Eisen aufweist. Die genaue stöchiometrische Zusammensetzung kann variieren. Bekannt sind beispielsweise FeZn₆ oder FeZn₁₃. Unter dem Begriff Hartzink werden allgemein Fe-Zn-Mischphasen zusammengefasst, die Fe und Zn aufweisen.

Hartzink entsteht beispielsweise bei der Feuerverzinkung von Stahlteilen. In der flüssigen Zinkschmelze entsteht eine feste Zink-Eisen-Legierung, das Hartzink. Dieses Hartzink sinkt auf dem Boden der Zinkschmelze ab und wird mit geeigneten Werkzeugen regelmäßig entfernt. Dabei wird jedoch nicht nur die Fe-Zn-Legierung, sondern auch reines Zink mit entfernt.

Solche Mischungen aus Zink und Hartzink können in der Herstellung von Zinkoxid verwendet werden. Das vorhandene freie Zink, welches nicht an Fe gebunden ist, wird in einem Ofen erhitzt und zu ZnO oxidiert. Die verbleibende Fe-Zn-Phase verbleibt im Ofen.

Die Nutzung der Mischung aus Hartzink und Zink zur Herstellung von ZnO hat den Vorteil, dass die Rohstoffe kostengünstig erhalten werden könne. Nachteilig ist jedoch, dass die Fe-Zn-Phase im Ofen verbleibt, dort fest wird und somit das Volumen des Ofens sowie ggf. den Wärmetransport im Inneren des Ofens verändert. Damit der Innenraum des Ofens wieder vollständig zur Verfügung steht, muss die Fe-Zn-Phase in regelmäßigen Abständen aus dem Ofen entfernt werden. Hierfür muss der Ofen abgekühlt werden, was einen erhöhten Energiebedarf bedingt.

Es besteht daher Bedarf an einem Verfahren zur Herstellung von ZnO aus Hartzink, welches diese Nachteile vermeidet. Insbesondere soll vermieden werden, dass die Fe-Zn-Phase aus dem Ofen entfernt werden und dieser hierfür abgekühlt werden muss. Überraschenderweise hat sich gezeigt, dass durch die Zugabe von AI zu Hartzink diese Nachteile vermieden werden können.

In einer ersten Ausführungsform betrifft die der vorliegenden Erfindung zu Grunde liegende Aufgabe daher ein Verfahren zur Herstellung von ZnO aus Hartzink, welches die folgenden Schritte umfasst:
a) Bereitstellen von Hartzink,
b) Bereitstellen von Aluminium,
c) Zugabe von Hartzink und Aluminium in einen Drehrohrofen,
d) Erwärmen von Hartzink und Aluminium auf eine Temperatur von zumindest 900 °C, wodurch Zn und eine Al-Fe-Phase erhalten werden,
e) Oxidation des entstehenden gasförmigen Zn, so dass ZnO entsteht, welches kontinuierlich entfernt wird, und
f) Entfernung der Al-Fe-Phase aus dem Drehrohrofen.

Überraschenderweise wurde gefunden, dass in einem Drehrohrofen Hartzink und Aluminium derart miteinander zur Reaktion gebracht werden können, dass das im Hartzink enthaltene Eisen mit dem Aluminium zu einer Al-Fe-Phase reagiert. Diese Al-Fe-Phase schwimmt auf dem flüssigen Zink im Drehrohrofen auf und kann kontinuierlich oder diskontinuierlich entfernt werden. Hierfür ist es nicht notwendig, dass der Ofen abgekühlt wird. Vielmehr kann die aufschwimmende Phase auch im Betrieb des Ofens beispielsweise mit einer Kratze entfernt werden. Das erfindungsgemäße Verfahren ermöglicht daher erstmals die unmittelbare Umsetzung von Hartzink zu Zinkoxid, ohne dass Zwischenschritte oder aufwändige Apparaturen notwendig sind.

Eine kontinuierliche Entfernung kann beispielsweise dadurch erfolgen, dass der Drehrohrofen gegenüber dem Boden schräg aufgestellt wird. Ein Drehrohrofen ist üblicherweise parallel zum Boden ausgerichtet, so dass auch ein Flüssigkeitsspiegel im Inneren des Drehrohrofens waagerecht ist. Wird nun der Drehrohrofen leicht schräg gestellt, ergibt sich eine Fließrichtung im Inneren des Ofens. Ein Drehrohrofen weist üblicherweise eine vordere Öffnung, über welche die Materialien, im vorliegenden Fall Hartzink und Aluminium, eingebracht werden, und eine hintere Öffnung, über welche Wärme in den Ofen eingebracht wird, auf. Zwischen der vorderen Öffnung und der hinteren Öffnung erstreckt sich der Drehrohrofenkörper. Die vordere und hintere Öffnung sind so ausgestaltet, dass eine Öffnung vorhanden ist, durch die Material bzw. Wärme eingebracht werden kann, der Inhalt jedoch im Inneren des Ofens verbleibt und nicht ausfließt.

Erfindungsgemäß kann der Drehrohrofenkörper nun gegenüber der Waagerechten schräg gestellt werden, so dass der hintere Bereich in Richtung der hinteren Öffnung höher steht als der vordere Bereich in Richtung der vorderen Öffnung. Hierdurch ergibt sich eine Fließrichtung im Inneren des Drehrohrofenkörpers in Richtung der vorderen Öffnung. Diese kann nun so gewählt werden, dass die flüssige Al-Fe-Phase kontinuierlich abfließt, wohingegen das Zn im Inneren des Drehrohrofens verbleibt und zur Oxidation zur Verfügung steht. Der Winkel zwischen Drehrohrofen und waagerecht, der sich durch die Schrägstellung ergibt, liegt vorzugsweise im Bereich zwischen 0,2° und 2,5°, insbesondere zwischen 0,5° und 2°, besonders zwischen 0,7° und 1,5 °, beispielsweise 0,8°, 0,9°, 1°, 1,1°, 1,2°, 1,3° oder 1,4°.

Das Zink aus dem Hartzink steht nun zur Verfügung, um mit Sauerstoff zu ZnO zu reagieren. Entsprechend ermöglicht das erfindungsgemäße Verfahren nicht nur eine Energieeinsparung durch die Vermeidung der Abschaltung der Drehrohröfen. Gleichzeitig wird auch eine Steigerung der Effektivität im Hinblick auf den Umsatz an ZnO erreicht, das Zn nicht mehr an Fe gebunden vorliegt.

Damit Hartzink mit Al reagiert, müssen diese miteinander vermischt werden. Überraschenderweise hat sich gezeigt, dass für eine ausreichende Durchmischung keine Hilfsmittel im Inneren des Drehrohrofens vorhanden sein müssen. Vielmehr reicht die Drehbewegung des Ofens aus, um eine Reaktion zwischen Aluminium und Eisen aus dem Hartzink zu ermöglichen. Die Drehgeschwindigkeit des Drehrohrofens beträgt vorzugweise von 0,05 U/min bis 5 U/min, insbesondere von 0,1 U/min bis 2,5 U/min, bevorzugt von 0,15 U/min bis 1,5 U/min. Bei dieser Drehgeschwindigkeit ist eine gute Durchmischung sichergestellt. Gleichzeitig kann ZnO entstehen, so dass die Herstellung von ZnO nicht nachteilig beeinflusst wird.

Hartzink im Sinne der vorliegenden Erfindung ist somit eine Eisenaluminiumlegierung mit nicht näher spezifizierter Zusammensetzung. Üblicherweise beträgt der Anteil an Eisen im Hartzink 0,5 Gew.-% bis 5 Gew.-%, vorzugsweise 1 Gew.-% bis 3 Gew.-%. Das Hartzink kann erfindungsgemäß als einzige Zinkquelle zur Herstellung von Zinkoxid dienen. Es ist jedoch auch möglich, dass Hartzink gemeinsam mit reinem Zink bereitgestellt wird. Reines Zink ist dabei Zink mit einer Reinheit von 99,9% oder besser, insbesondere 99,99% oder besser.

Auch das benötigte Aluminium kann als reines Aluminium zugegeben werden. Es hat sich jedoch auch gezeigt, dass nicht Aluminium alleine, sondern auch Aluminiumlegierungen, insbesondere eine Aluminiumzinklegierung, in der Lage ist, Eisen aus dem Hartzink zu binden. Wird demnach eine Aluminiumzinklegierung zu Hartzink in einem Ofen gegeben bzw. diese gemeinsam im Drehrohrofen wieder miteinander in Kontakt gebracht, so entsteht eine Eisenaluminiumphase, die aus dem Drehrohrofen beispielsweise mit einer Kratze abgezogen werden kann. Das Zink aus der Zinklegierung steht dann auch zur Herstellung von Zinkoxid zur Verfügung.

Die Menge an benötigtem Aluminium entspricht dabei stöchiometrisch dem Gehalt an Eisen. Demnach wird vorzugsweise ein Verhältnis von Aluminium zu Eisen von 0,5:2 bis 2:0,5 eingestellt. In diesen Bereichen reagiert das Aluminium quasi vollständig mit dem Eisen, so dass möglichst viel Zink zur Verfügung steht, um zu Zinkoxid zu reagieren. Nicht abreagiertes Eisen verbleibt nach wie vor in Form von einer Eisenzinklegierung im Ofen. Ziel ist es, dass dieser Anteil möglichst gering ist, so dass Aluminium vorzugsweise stöchiometrisch oder überstöchiometrisch in Bezug auf den Eisenanteil zugegeben wird. Vorzugsweise ist das Molverhältnis von Aluminium zu Eisen daher im Bereich von 1:1 bis 2:1.

Hartzink und Aluminium können gleichzeitig, oder nacheinander in den Drehrohrofen gegeben werden. So ist es erfindungsgemäß beispielsweise möglich, dass zunächst nur das Hartzink in den Drehrohrofen gegeben und dort erwärmt wird. Anschließend wird das Aluminium in den Drehrohrofen zugegeben. Die Temperatur beträgt dabei zumindest 90° C. Vorzugsweise liegt sie bei der Siedetemperatur von Zink, also bei zumindest 905° C, insbesondere bei 907° C. Es ist auch möglich, dass zunächst das Aluminium in den Ofen gegeben wird und anschließend das Hartzink.

Diese Temperatur ist notwendig, um aus Zink Zinkoxid zu gewinnen, welches kontinuierlich entfernt wird.

Erfindungsgemäß ist es nicht nur möglich, dass Hartzink und Aluminium nacheinander in den Drehrohrofen gegeben werden. Es ist auch möglich, dass Hartzink und Aluminium gleichzeitig in den Drehrohrofen gegeben werden und dort dann auf die benötigte Temperatur erwärmt werden.

Die Zugabe von Hartzink und Aluminium in den Drehrohrofen kann im laufenden Betrieb erfolgen, so dass jederzeit Hartzink und Aluminium in den Ofen gegeben werden können. Dies ermöglicht einen kontinuierlichen Betrieb des Drehrohrofens, ohne dass dieser abgekühlt und neu erwärmt werden muss, wodurch es zu einer deutlichen Energieeinsparung gegenüber dem bisherigen Verfahren kommt.

Zudem steht im Hartzink an Eisen gebundenes Zink noch zur Verfügung, um Zinkoxid zu gewinnen, so dass der Rohstoff Zink effektiv genutzt werden kann, um Zinkoxid zu erhalten.

Das erhaltene Zinkoxid besteht zu mindestens 99,6 Gew.-% aus Zinkoxid, bestimmt gemäß DIN EN 55908-2:1998-07 (aus Juli 1998). Das Zinkoxid kann Verunreinigungen aufweisen, die dem Hartzink, Aluminium oder auch dem alternativ oder zusätzlich zugeführten reinen Zink bzw. Aluminiumzinklegierungen entstammen. Erfindungsgemäß weist das Zinkoxid die folgenden Verunreinigungen, gemessen gemäß DIN EN ISO 11885:2009 (aus September 2009) :
- Pb: 0,5 Gew.-% oder weniger, insbesondere 0,2 Gew.-% oder weniger;
- Cu: 50 ppm oder weniger, insbesondere 10 ppm oder weniger;
- Cd: 350 ppm oder weniger, insbesondere 200 ppm oder weniger;
- Fe: 400 ppm oder weniger, insbesondere 200 ppm oder weniger;
- Mn: 10 ppm oder weniger, insbesondere 5 ppm oder weniger.

Das erfindungsgemäße Verfahren ermöglicht somit die Herstellung von reinem Zinkoxid. Der Anteil an Eisen im Zinkoxid wird durch das erfindungsgemäße Verfahren gegenüber solchen Verfahren, in denen kein Aluminium zugegeben wird, im Wesentlichen nicht beeinflusst.

Es hat sich gezeigt, dass auch der Anteil an Aluminium im Zinkoxid vernachlässigbar bleibt und üblicherweise unterhalb von 100 ppm, vorzugsweise unterhalb 50 ppm bleibt.

Erfindungsgemäß weist das hergestellte Zinkoxid vorzugsweise eine BET-Oberfläche, bestimmt gemäß DIN ISO 9277:2010 (aus Januar 2014), im Bereich von 1-15 m² pro Gramm, insbesondere von 2-12 m² pro Gramm auf. So kann es beispielsweise eine spezifische Oberfläche von 2-6 m² pro Gramm oder von 7-11 m² pro Gramm aufweisen. Auch BET-Oberflächen von 3-6 m² pro Gramm oder von 5-7 m² pro Gramm können in einer bevorzugten Ausführungsform erhalten werden. Die BET-Messung ist ein Begriff für ein Analyseverfahren zur Größenbestimmung von Oberflächen, insbesondere poröser Festkörper, mittels Gasadsorption. Die spezifische Oberfläche, die sogenannte BET-Oberfläche, wird aus experimentellen Daten errechnet. BET steht dabei für die Nachnamen der Entwickler: Stephen Brunauer, Paul Hugh Emmett und Edward Teller.

In den nachfolgenden Ausführungsbeispielen wird die vorliegende Erfindung in nicht limitierender Art und Weise weiter erläutert.

### Ausführunasbeispiele

### 1. Beispiel

In einem Drehrohrofen wurde Hartzink auf eine Temperatur von 907° C geschmolzen. Zur Homogenisation der Schmelze wurde der Ofen gedreht. Es wurde von einem Anteil von 2% Eisen für das Hartzink ausgegangen. Entsprechend wurden in den Ofen 3800 kg Hartzink eingeführt und 13 kg Aluminiumspäne zugegeben. An der Oberfläche des Schmelzbades wurden 8 Proben entnommen, wobei die Proben 1 bis 5 vor der Aluminiumzugabe und die Proben 6 bis 8 nach der Aluminiumzugabe entnommen wurden.

Jede Probe wurde an 4 verschiedene Stellen mit dem mobilen RFA (Röntgenfluoreszenz-Analysatoren) der Fa. analyticon instruments GmbH, Deutschland, auf den Zn und Fe Gehalt untersucht und der Mittelwert der 4 Messungen berechnet.

Während bei den ersten Proben ein Anteil von 0,9 Gew.-% Eisen und 98,45 Gew.-% Zink gemessen wurden, enthielten die Proben 6-8 einen Anteil an 1,7 Gew.-% Eisen und etwa 97,8 Gew.-% Zink.

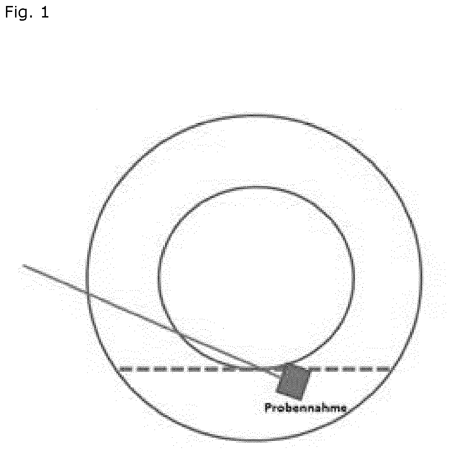

Das Eisen hat sich somit in den Proben angereichert und entspricht in etwa dem Eisengehalt im Hartzink. Dies ist in der Position der Probennahme begründet, welche an der Oberfläche der Schmelze erfolgt ist, wie in Fig. 1 schematisch gezeigt. An der Oberfläche des Schmelzbades schwimmt somit eine Al-Fe-Phase auf.

Die Schmelze wurde auch verwendet, um Zinkoxid herzustellen. Das erhaltene ZnO wurde analysiert. Es wurden insgesamt 12 Proben untersucht um die Mittelwerte berechnet. Der Anteil an Aluminium betrug 20 ppm. Der Anteil an Eisen 0,026 Gew.-%.

### 2. Beispiel

3800 kg Hartzink (Eisenanteil ca. 2-3 Gew.-%) wurden in einem Drehrohrofen geschmolzen und auf eine Temperatur von >600° C gebracht. Im Anschluss wurden 26 Barren à 7 kg Zinkaluminiumlegierung (85/15) hinzugefügt. Der Ofen wurde zwei Stunden lang gedreht. Anschließend wurden 6 Blöcke Zink abgestochen. In den Blöcken 1-5, welche die eigentliche Schmelze enthielten, lag der Anteil an Zink zwischen 98 und 99,3 Gew.-%, der Anteil an Eisen und der Aluminium bei unter 0,35 Gew.-%. In der letzten Probe, in der auch die auf der Oberfläche des Schmelzbades aufschwimmende Phase mit abgestochen wurde, ergab sich eine andere Zusammensetzung. Der Zinkanteil betrug lediglich 94,7 Gew.-%, wohingegen der Eisenanteil auf 2,39 Gew.-% angestiegen ist. Der Aluminiumgehalt lag bei 0,05 Gew.-%. Während sich der Eisengehalt somit in den ersten abgegossenen Blöcken wie erwartet reduziert hat, fand sich das Eisen im letzten Block wieder.

## Patentansprüche

1. Verfahren zur Herstellung von Zink-Oxid unmittelbar aus Hartzink umfassend die folgenden Schritte
a) Bereitstellen von Hartzink,
b) Bereitstellen von Aluminium,
c) Zugabe von Hartzink und Aluminium in einen Drehrohrofen,
d) Erwärmen von Hartzink und Aluminium auf eine Temperatur von zumindest 900 °C, wodurch Zn und eine Al-Fe-Phase erhalten werden,
e) Oxidation des entstehenden gasförmigen Zn, so dass ZnO entsteht, welches kontinuierlich entfernt wird, und
f) Entfernung der Al-Fe-Phase aus dem Drehrohrofen.

2. Verfahren nach Anspruch 1, **dadurch gekennzeichnet, dass** das Hartzink einen Anteil an Eisen von 0,5 Gew.-% bis 5 Gew.-%, vorzugsweise 1 bis 3 Gew.-% aufweist.

3. Verfahren nach Anspruch 1 oder 2, **dadurch gekennzeichnet, dass** das Hartzink zusammen mit reinem Zink bereitgestellt wird.

4. Verfahren nach zumindest einem der Ansprüche 1 bis 3, **dadurch gekennzeichnet, dass** das Aluminium in Form von reinem Aluminium oder in Form einer Aluminiumlegierung, insbesondere als Al-Zn-Legierung bereitgestellt wird.

5. Verfahren nach zumindest einem der Ansprüche 1 bis 4, **dadurch gekennzeichnet, dass** Aluminium stöchiometrisch zum Gehalt an Eisen im Hartzink bereitgestellt wird.

6. Verfahren nach zumindest einem der Ansprüche 1 bis 5, **dadurch gekennzeichnet, dass** es die folgenden Schritte umfasst:
a) Bereitstellen von Hartzink,
b) Bereitstellen von Aluminium,
c) Zugabe von Hartzink und Aluminium in einen Drehrohrofen, wobei zunächst das Hartzink in den Drehrohrofen gegeben und dort erwärmt wird und anschließend Aluminium in den Drehrohrofen gegeben wird,
d) Erwärmen von Hartzink und Aluminium auf eine Temperatur von zumindest 900 °C, wodurch Zn und eine Al-Fe-Phase erhalten werden,
e) Oxidation des entstehenden gasförmigen Zn, so dass ZnO entsteht, welches kontinuierlich entfernt wird, und
f) Entfernung der Al-Fe-Phase aus dem Drehrohrofen.

7. Verfahren nach zumindest einem der Ansprüche 1 bis 5, **dadurch gekennzeichnet, dass** es die folgenden Schritte umfasst:
a) Bereitstellen von Hartzink,
b) Bereitstellen von Aluminium,
c) gleichzeitige Zugabe von Hartzink und Aluminium in einen Drehrohrofen,
d) Erwärmen von Hartzink und Aluminium auf eine Temperatur von zumindest 900 °C, wodurch Zn und eine Al-Fe-Phase erhalten werden,
e) Oxidation des entstehenden gasförmigen Zn, so dass ZnO entsteht, welches kontinuierlich entfernt wird, und
f) Entfernung der Al-Fe-Phase aus dem Drehrohrofen.

8. Verfahren nach zumindest einem der Ansprüche 1 bis 7, **dadurch gekennzeichnet, dass** die Temperatur im Inneren des Drehrohrofens 900 °C oder mehr, insbesondere 905 °C oder mehr, vorzugsweise 907 °C oder mehr beträgt.

9. Verfahren nach zumindest einem der Ansprüche 1 bis 8, **dadurch gekennzeichnet, dass** das erhaltene Zinkoxid zu mindestens 99,6 Gew.-% aus ZnO besteht, bestimmt gemäß DIN EN 55908-2:1998-07.

10. Verfahren gemäß Anspruch 9, **dadurch gekennzeichnet, dass** das Zink-oxid die folgenden Verunreinigungen, gemessen gemäß DIN EN ISO 11885:2009, aufweist:
• Pb: 0,5 Gew.-% oder weniger, insbesondere 0,2 Gew.-% oder weniger;
• Cu: 50 ppm oder weniger, insbesondere 10 ppm oder weniger;
• Cd: 350 ppm oder weniger, insbesondere 200 ppm oder weniger;
• Fe: 400 ppm oder weniger, insbesondere 200 ppm oder weniger;
• Mn: 10 ppm oder weniger, insbesondere 5 ppm oder weniger.

11. Verfahren nach zumindest einem der Ansprüche 1 bis 10, **dadurch gekennzeichnet, dass** das erhaltene Zinkoxid eine BET-Oberfläche, bestimmt gemäß DIN ISO 9277:2010, im Bereich von 1 bis 15 m²/g, insbesondere von 2 bis 12 m²/g aufweist.

12. Verfahren nach zumindest einem der Ansprüche 1 bis 11, **dadurch gekennzeichnet, dass** der Drehrohrofen einen Drehrohofenkörper aufweist und der Drehrohrofenkörper gegenüber der Parallelen um einen Winkel von 0,2° bis 2,5° schräg steht, wodurch ein hinterer Bereich entsprechend höher steht als ein vorderer Bereich des Drehrohofenkörpers.
